# EUROPEAN PATENT APPLICATION

(11) **EP 3 929 162 A1**
(43) Date of publication of application: **29.12.2021**
(21) Application number: 20759049.8
(22) Date of filing: 17.01.2020
(51) Int. Cl.: C02F 1/32

(54) **DEVICE FOR DISINFECTING LIQUIDS USING ULTRAVIOLET RADIATION**

(30) Priority: 19.02.2019 RU 2019104556
(71) Applicant: Bogun, Pavel Vladimirovich, G. Zelenograd, 124482 (RU)
(72) Inventor: Bogun, Pavel Vladimirovich, G. Zelenograd, 124482 (RU)
(74) Representative: Jeck, Anton
(86) International application number: PCT/RU2020/000020
(87) International publication number: WO 2020/171738

(57) **Abstract**

The invention relates to the field of disinfecting liquids, including water, with ultraviolet (UV) radiation. The device for disinfecting liquids with ultraviolet radiation comprises a sealed cylindrical reactor vessel (1) with a UV-lamp (2) in the form of a straight tube contained therein along the axis thereof and arranged inside a protective quartz cover (3) with one open outlet on at least one side thereof through the end of the reactor vessel (1) for connecting lamp (2) power supply. The reactor vessel is equipped with inlet (4) and outlet (5) pipe sockets located at its ends. One or more flow breakers (6) are installed inside the reactor vessel between the inlet (4) and outlet (5) pipe sockets. The treated liquid enters the reactor vessel (1) via the inlet pipe socket (4) and flows along its axis to the outlet pipe socket (5), wherein the flow breakers (6) create and maintain the longitudinal flow rate distribution in such a way that it reaches the maximum at the surface of the protective cover (3) and gradually decreases with the distance from the lamp axis. The correlation between the longitudinal flow rate and the distance from the lamp axis will be optimal if the type of said correlation will approximate the type of the correlation between the average UV-radiation intensity over the length of the lamp and said distance. The technical result is increased uniformity of the exposure of the entire volume of the treated liquid to UV-radiation and, as a consequence, increased disinfection level and/or productivity of the device.

## Description

The invention relates to the field of disinfecting liquids, including water, with ultraviolet radiation (UV) in the bactericidal wavelength range.

The device for disinfecting liquids with ultraviolet radiation comprises a sealed cylindrical reactor vessel with a UV-lamp in the form of a straight tube contained therein along the axis thereof, said UV-lamp is arranged inside a protective quartz cover with an open outlet on at least one side thereof through the end of the reactor vessel for connecting the lamp power supply. The reactor vessel is equipped with inlet and outlet pipe sockets located at its ends. One or more flow breakers are installed inside the reactor vessel between the inlet and outlet pipe sockets. The treated liquid enters the reactor vessel via the inlet pipe socket and flows along its axis to the outlet pipe socket, wherein the flow breakers create and maintain the flow rate distribution in such a way that it reaches the maximum at the surface of the protective cover and gradually decreases with the distance from the lamp axis. The correlation between the longitudinal flow rate and the distance from the lamp axis will be optimal if the type of said correlation will approximate the type of the correlation between the average UV-light intensity along the length of the lamp and said distance.

A device for disinfecting liquids, in particular water, by UV-radiation, comprising one or more ultraviolet lamps made in the form of long tubes equipped with electrodes at the ends thereof and placed in a protective quartz cover located inside a sealed reactor vessel and having inlet and outlet pipe sockets for the liquid flow is known in the art. As a rule, the reactor vessel is made in the form of a cylinder, the lamps in protective covers are placed parallel to its axis in such a way as to allow access to the lamp electrodes through the openings at the ends of the vessel for power supply, while the inlet and outlet pipe sockets are located at the ends of the cylinder. The treated liquid enters through the inlet pipe socket into the reactor vessel and flows therethrough towards the outlet pipe socket while being exposed to the bactericidal effect of UV-radiation.

The disadvantage of the described device is its low disinfection efficacy due to uneven irradiation of the treated liquid volume. Even when the liquid is completely transparent to UV rays, the radiation intensity from each lamp at each point of the reactor vessel volume depends on the distance from this lamp. When flowing along the reactor vessel, the parts of the flow located far from the lamps may receive radiation doses several times lower than the parts of the flow near the protective covers of the lamps. The uneven distribution of radiation intensity within the reactor vessel becomes even greater if the treated liquid absorbs UV-light, for example due to the presence of dissolved substances or suspended particulate matter.

Said disadvantage can be eliminated by mixing the flow in such a way that each microvolume of the liquid is exposed to the same radiation effect. For these purposes, patents US5352359, US2007/0012883 A1, US2009/0084734 A1, RU2027678 C1, 1992, for example, proposed devices with various baffles and blades inside a reactor vessel or a spiral flute on the inner surface of the reactor vessel, as in RU88345 U1, 2009. Spiral flutes, however, do not provide suitable mixing. On the other hand, in order to mix a liquid using baffles and/or blades to ensure effective averaging of the radiation doses received by the liquid, they have to be placed perpendicular or at an angle to the axis of the reactor vessel and sufficiently close to each other, which creates significant blockages for the radiation propagating at an angle to the lamp axes and lowers the radiation intensity. Manufacturing the baffles and blades from materials that either transmit UV-light (quartz) or effectively reflect it (anodized aluminum) is technologically difficult and thus, does not find practical application.

The closest to the claimed technical solution is a device (patent US2009/00884734 A1 publ. 2 06/04/2009) comprising a closed cylindrical reactor vessel with inlet and outlet pipe sockets near its ends with a UV-lamp configured therein shaped as a straight tube and arranged parallel to the vessel reactor axis, and a plurality of transverse baffles with openings. The openings create turbulence in the liquid flow ensuring its mixing.

Increased uniformity of UV-radiation throughout the entire volume of the treated liquid and, as a consequence, increased disinfection level and/or productivity of the proposed device can be achieved with flow breakers, wherein the flow parts moving near the lamp and exposed to more intense UV-radiation are treated for a shorter time period than the flow parts moving at a distance from the lamp in the areas of lesser radiation intensity.

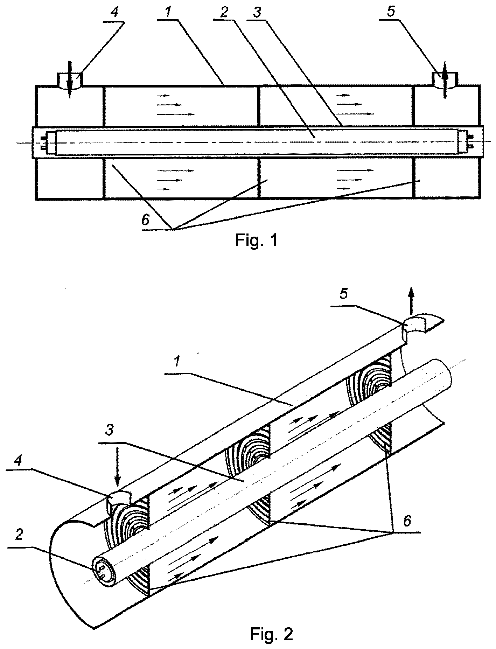

The design of the device is illustrated in Fig. 1, 2, and 3.

A device for disinfecting liquids with UV-radiation comprises a sealed cylindrical reactor vessel 1 with a UV-lamp 2 in the form of a straight tube arranged therein along the axis thereof, said UV-lamp is arranged inside a protective quartz cover 3 having one open outlet on at least one side thereof through the end of the reactor vessel 1 for connecting the lamp 2 power supply. The reactor vessel is equipped with an inlet pipe socket 4 and an outlet pipe socket 5 located at its ends. One or more flow breakers 6 are installed inside the reactor vessel 1 between the inlet pipe socket 4 and the outlet pipe socket 5 that create and maintain the flow rate distribution in such a way that it reaches the maximum at the surface of the protective cover and gradually decreases with the distance from the lamp axis. The correlation between the longitudinal flow rate and the distance from the lamp axis will be optimal if the type of said correlation will approximate the correlation type between the average UV-radiation intensity along the length of the lamp and said distance. The technical result is increased radiation uniformity throughout the entire volume of the treated liquid and, as a consequence, increased disinfection level and/or productivity of the proposed device.

The device functions as follows: The flow of the treated liquid enters the reactor vessel 1 through the inlet pipe socket 4 and passes through the pipe socket flow breaker 6 nearest to said pipe socket. After that, the distribution of the flow rate over the cross-section of the reactor vessel becomes such that said flow rate is maximal at the surface of the protective lamp cover 3 and decreases as the distance from it increases. If the correlation between the longitudinal flow rate and the distance to the lamp axis is proportional to the average UV-radiation intensity for this distance across the length of lamp 2, the time of passage through the device of the flow part moving at any distance from the lamp is inversely proportional to the average intensity of the radiation that affects it. This means that the resulting radiation dose calculated as a product of multiplying radiation intensity by irradiation time is about the same for all parts of the flow. The distribution of the flow rate over the cross-section of the reactor vessel achieved after the liquid passes through the flow breaker 6 is maintained at a fairly long distance past the flow breaker. Thus, one flow breaker placed near the inlet pipe socket 4 may be sufficient for maintaining the flow rate distribution close to the optimal across the entire length of the reactor vessel. Depending on the liquid viscosity, the size of the reactor vessel 1, and the irradiation dose required for disinfection, additional flow breakers 6 can be placed along the path of the liquid flow.

If the distance from the lamp is considerably shorter than the lamp length and the distance to the lamp ends, the UV-radiation intensity is the highest at the surface of the protective cover of the lamp decreasing in approximately inverse proportion to the distance from the axis of the lamp. When the distance from the cover increases to the level comparable to the length of the lamp and/or the distance to its ends and when the UV radiation is absorbed into the treated liquid, the rate of decrease in irradiation intensity increases as the distance increases. Therefore, to achieve the maximum effect, the flow breakers have to form and maintain the correlation between the longitudinal flow rate of the treated liquid and the distance from the lamp axis to be close to the inversely proportional or more rapidly decreasing from this distance. The specific type of the optimal flow rate distribution will depend on the geometric dimensions of the reactor vessel and the absorption coefficient of UV-radiation in the treated liquid.

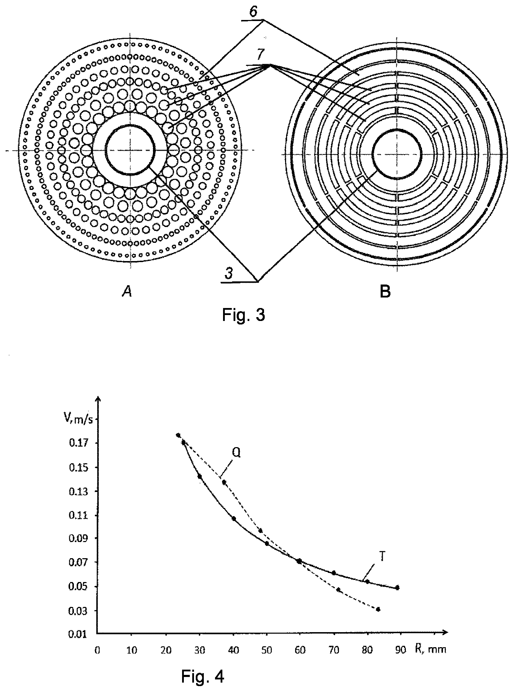

The flow breakers can be configured in the form of transverse baffles with openings for the passage of the treated liquid as shown in Fig.3. Said baffles are divided into concentric annular zones of equal widths with a common center on the lamp axis. Additionally, the first zone formed by the surface of the protective cover of lamp 3 and the edge of the baffle in flow breaker 6 is completely open for the passage of the liquid, while passage openings 7 are evenly distributed throughout the remaining zones. Part of the liquid flowing through openings 7 in each zone forms a cylindrical layer after passing a baffle, moving at a speed proportional to the ratio of the total area of the openings in this zone to the area of the zone. The area of each zone is proportional to its average radius. If, additionally, the total area of the passage openings for all zones is the same, the flow rate in the cylindrical layers of the flow past the baffle will be inversely proportional to the average radii of the corresponding zones. If the average radiation intensity along the length of the lamp decreases with the distance from the lamp axis faster than in inverse proportion, the total area of the passage openings in each zone has to be smaller than that for the zone closest thereto from the side of the lamp. The specific optimal correlation between the total area of the passage openings and the average radius of the zone will be determined by the length of the lamp, the size of the cross-section of the reactor vessel, and the absorption coefficient of UV-radiation in the treated liquid.

Fig 4 shows an example comparing the correlation between the longitudinal velocity V for the water flow and the distance from the axis of the lamp R after passing through a flow breaker configured according to Fig. 3B (curve Q) and the calculated optimal correlation between said velocity proportional to the UV-radiation intensity averaged over the length of the lamp and the same distance R (curve T). The calculations were made for the following parameters: total water flow - 1.8 I/sec.; water temperature - 20°C; outer diameter of the protective lamp cover - 3-4 cm; inner diameter of the reactor vessel - 1-18 cm; number of zones where the passage openings of the flow breaker are located - 7; total areas of the passage openings of all zones are equal to each other; the distance travelled by the water after passing through the flow breaker - 40 cm.

## Claims

1. device for disinfecting liquids with ultraviolet radiation comprising: a sealed cylindrical reactor vessel; a UV-lamp configured in the form of a straight tube contained therein and arranged along the axis thereof; said lamp arranged inside a sealed protective quartz cover; said cover having an open outlet through the end of the reactor vessel at least on one side for connecting lamp power supply; inlet and outlet pipe sockets arranged at the ends of the reactor vessel; and one or more flow breakers arranged inside said reactor vessel between the inlet and outlet pipe sockets, wherein said flow breakers are configured in the form of baffles transverse to the lamp axis having a plurality of annular zones with equal widths and a common center on the lamp axis with openings for the liquid passage equally spaced along these zones, wherein the total area of the passage openings of each zone does not exceed said parameter for the zone closest thereto from the common center side, in order to provide the flow breaker with the ability to form and maintain such liquid flow distribution that its velocity along the axis of the reactor vessel is maximal at the surface of the protective cover, gradually diminishing with the distance therefrom.
